# EUROPEAN PATENT SPECIFICATION

(11) **EP 2 144 401 B1**
(45) Date of publication and mention of the grant of the patent: **04.09.2013**
(21) Application number: 08864956.1
(22) Date of filing: 24.12.2008
(51) Int. Cl.: G06F 21/00, G06F 17/30, H04L 29/08

(54) **METHOD, DEVICE AND SYSTEM FOR PROVIDING AND READING FEED FILE**
VERFAHREN, GERÄT UND SYSTEM ZUM BEREITSTELLEN UND LESEN EINER FEED-DATEI
PROCÉDÉ, DISPOSITIF ET SYSTÈME POUR FOURNIR ET LIRE UN FIL DE SYNDICATION

(30) Priority: 25.12.2007 CN 200710032867
(43) Date of publication of application: 13.01.2010
(73) Proprietor: Huawei Technologies Co., Ltd., Longgang District, Shenzhen Guangdong 518129 (CN)
(72) Inventor: YIN, Xin, Longgang District Shenzhen, 518129 (CN); ZHANG, Fei, Longgang District Shenzhen, 518129 (CN)
(74) Representative: Kreuz, Georg Maria
(86) International application number: PCT/CN2008/073676
(87) International publication number: WO 2009/079963

(56) References cited:
- CN-A- 1 913 522
- CN-A- 101 212 298
- US-A1- 2004 225 749
- US-A1- 2007 106 754
- US-A1- 2007 156 809
- US-A1- 2007 220 016

## Description

### Field of the Invention

The present invention relates to the communication field, and in particular, to a method, apparatus, and system for providing and reading Feed files.

### Background of the Invention

RSS is an acronym of Rich Site Summary or Really Simple Syndication, and is an eXtensible Markup Language (XML) format for sharing news titles and other web contents. Although RSS is an acronym of different expressions and is interpreted differently by different technical groups, the development of RSS is not hindered. With the popularity of blogs, RSS is supported by more and more websites and blog software as a basic function, and becomes an XML application most widely used at present.

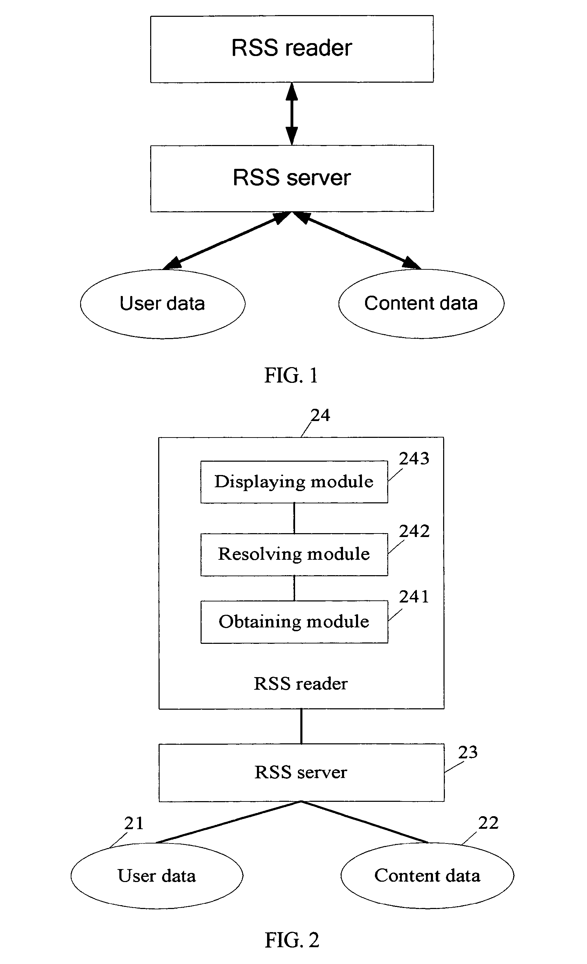

FIG. 1 shows an architecture for implementing the RSS technology in the prior art. The RSS server in FIG. 1 generates an RSS file (generally called "RSS Feed", namely, a Feed file) according to the user data and content data, and sends the file to the client. The RSS reader of the client displays the obtained Feed file to the user. Through the RSS technology, people may subscribe to news (such as important news, anecdotes, star information, and sports news), and may subscribe to blogs (such as the technical papers required in a job, or blogs of authors with common hobbies). People only need to subscribe to the desired contents via one RSS reader, and the contents are displayed in the reader automatically. People do not need to keep refreshing the web pages to obtain urgently desired messages because the RSS reader notifies the user of any update automatically.

However, the following defect has become apparent in the prior art: The RSS system is based on the RSS2.0 protocol, without any measures to restrict the reading of a user. For example, for a multi-user management system such as a blog system, any user may read all contents in the blog system through subscription. That is, even if the person who uploads the content in the blog system sets the content to be inaccessible to other users in the blog space, other users can still read the content through RSS subscription. Therefore, inconvenience or even if great losses are imposed onto the person who uploads the content in the blog system.

The patent application US 2007/0156809A1 discloses a really simple syndication (RSS) feed generator which provides a user access to a set of data in the form of an RSS feed containing an object. The RSS feed generator allows the user to generate a feed definition using any of a user interface, a web based application programming interface, and an HTTP request. The RSS feed generator uses the feed definition provided by the user to generate the RSS feed and exposes the RSS feed in the form of RSS XML data. The RSS feed generator allows a business system to dynamically update the set of data contained in the RSS feed in a manner that allows a user to perform a plurality of functions on the RSS feed.

### Summary of the Invention

A method according to claim 1 and a system according to claim 2 for providing and reading Feed files are disclosed in embodiments of the present invention to set rights of accessing contents of a Feed file and to display the contents of the Feed file according to the rights information.

In the embodiments of the present invention, the standard RSS2.0 protocol adopted by the existing RSS system is extended. While the RSS server generates a Feed file, rights of accessing the contents of the Feed file are set. Accordingly, after the RSS reader obtains the Feed file, the content rights information of the Feed file is resolved, and the contents of the Feed file are displayed to the user according to the content rights information. The present invention enables a user to filter the rights of accessing the Feed file, and meets the user requirements.

### Brief Description of the Drawings

FIG. 1 shows an architecture for implementing the RSS technology in the prior art;
FIG. 2 shows a structure of an RSS system according to an embodiment of the present invention;
FIG. 3 shows a structure of an RSS server according to an embodiment of the present invention;
FIG. 4 is a flowchart of a method for an RSS server to provide a Feed file according to an embodiment of the present invention;
FIG. 5 is a flowchart of a method for reading a Feed file provided by an RSS server according to an embodiment of the present invention;
FIG. 6 shows a structure of an RSS server according to an embodiment of the present invention; and
FIG. 7 is a flowchart of a method for an RSS server to provide a Feed file according to an embodiment of the present invention.

### Detailed Description of the Embodiments

A method, apparatus, and system for providing and reading Feed files are disclosed in the embodiments of the present invention. The content authorization of accessing the contents of a Feed file is set in an RSS server. An RSS reader resolves the content authorization of the Feed file and displays the contents of the Feed file according to the content authorization.

The present invention is hereinafter described in detail with reference to exemplary embodiments and accompanying drawings.

FIG. 2 shows a structure of an RSS system according to an embodiment of the present invention. The RSS system includes an RSS server 23 and an RSS reader 24.

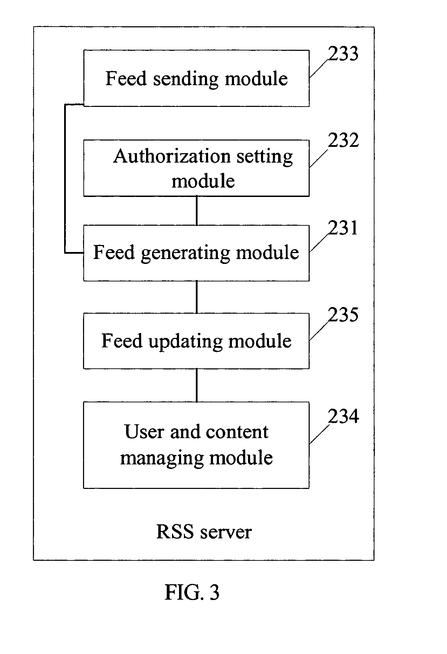

As shown in FIG. 3, the RSS server 23 includes:
a Feed generating module 231, adapted to generate a Feed file according to user data 21 and content data 22;
an authorization setting module 232, adapted to set content authorization of accessing contents of the Feed file according to authorization information provided by a user;
a Feed sending module 233, adapted to send the Feed file to an RSS reader 24 on a client;
a user and content managing module 234, adapted to manage the user data 21 and the content data 22; and
a Feed updating module 235, adapted to update the Feed file according to the user data or content data or authorization information modified by the user.

As shown in FIG. 2, the RSS reader 24 includes: an obtaining module 241, a resolving module 242, and a displaying module 243.

The obtaining module 241 is adapted to obtain the Feed file provided by the RSS server 23. Specifically, the obtaining module 241 sends a request to the RSS server 23, and the RSS server 23 sends a Feed file to the obtaining module 241 according to the request, or the RSS server 23 sends a Feed file to the obtaining module 241 actively.

The resolving module 242 is adapted to resolve the Feed file and the content authorization.

The displaying module 243 is adapted to display the contents of the Feed file according to the content authorization of the Feed file.

In the embodiments of the present invention, the content authorization includes "private", "public", and "visible to specified users". If the content authorization is "private", the contents of the Feed file are accessible to the provider of the contents of the Feed file only; if the content authorization is "public", the contents of the Feed file are accessible to all users; and, if the content authorization is "visible to specified users", the contents of the Feed file are accessible to specified users only.

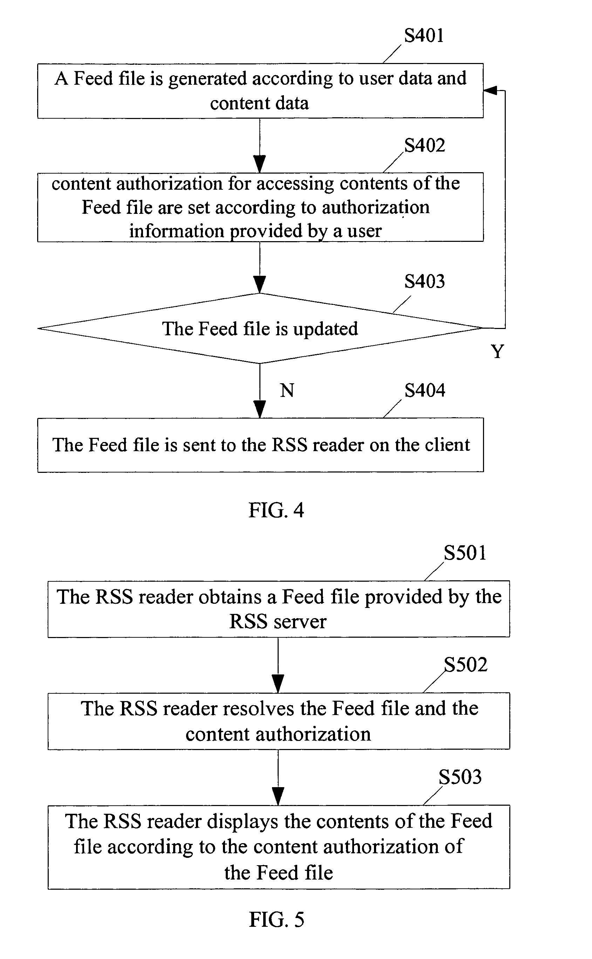

A method for an RSS server to provide a Feed file according to an embodiment of the present invention is detailed below with reference to FIG. 4. FIG. 4 is a flowchart of the method in this embodiment. The method includes the following steps:
Step S401: A Feed file is generated in the RSS server according to user data and content data.

An exemplary Feed file in the RSS 2.0 format is given below:

```
    <?xml version=" 1.0" ?>
    <rss version="2.0">
    <channel>
    <title>Wrox P2P Blogs - Andrew Watt</title>
    <ttl>60</ttl>
    <description>Wrox.com P2P Community Blogs</description>
    <link>http://p2p.wrox.com/blogs_author.asp?AUTHOR_ID=22322</link>
    <copyright>Copyright (c) 2000-2004 by John Wiley & Sons, Inc. or related
    companies.
    All rights reserved.</copyright>
    <language>en</language>
    <image>
    <url>http://p2p.wrox.com/images/p2p/wrox_rss_logo.gif</url>
    <title>Wrox P2P Blogs - Andrew Watt</title>
    <link>http://p2p.wrox.com/blogs_author.asp?AUTHOR_ID=22322</link>
    <width>3 6</width>
    <height>31 </height>
    </image>
    <item>
    <title>Firefox 1.0 is available</title>
    <description>Firefox 1.0 is available now for download from <a
    href="http://www.mozilla.org" targer="_blank"><a href="
    http://www.mozilla.org"
    target="_blank">http://www.mozilla.org</a></a>.<br /><br />It downloaded
    quickly for me, although that could change as the servers get busier, and it
    installed smoothly. <br /><br />Ifyou haven't already spotted the new
    functionality to add a live RSS or Atom feed to your Firefox bookmarks using
    the button at the extreme bottom right of the Firefox window give it a
    go....</description>
    <pubDate>Tue, 9 Nov 2004 12:01:11 GMT</pubDate>
    <link>http://p2p.wrox.com/blog.asp?BLOG_ID=37</link>
    <comments>http://p2p.wrox.com/blogs_comments.asp?BLOG_ID=37</
    comments>
    </item>
    </channel>
    </rss>
```

Step S402: The content authorization of accessing contents of the Feed file is set according to authorization information provided by a user.

The content authorization includes "private", "public", and "visible to specified users". If the content authorization is "private", the RSS reader displays the contents of the Feed file to the provider of the contents of the Feed file only; if the content authorization is "public", the RSS reader displays the contents of the Feed file to all users; and, if the content authorization is "visible to specified users", the RSS reader displays the contents of the Feed file to specified users only

It is assumed that user A has three contents (picture a, document b and picture c) in the system; the authorization information to picture a is "private", the authorization information to document b is "visible to specified users (such as user B and user C)", and the authorization information to picture c is "public". After the content authorization setting, a part of the Feed file is as follows:

```
    ...
    <language>en</language>
    <image>
    <url>http://p2p.wrox.com/images/p2p/wrox_rss_logo.gif</url>
    <title>Wrox P2P Blogs - Andrew Watt</title>
    <link>http://p2p.wrox.com/blogs_author.asp?AUTHOR_ID=22322</link>
    <width>3 6</width>
    <height>31 </height>
    <auth>'A'</auth>
    </image>
    <item>
    <title>Firefox 1.0 is available</title>
    ...
    <language>en</language>
    <doc>
    <url>http://p2p.wrox.com/images/p2p/wrox_rss_logo.gif</url>
    <title>Wrox P2P Blogs - Andrew Watt</title>
    <link>http://p2p.wrox.com/blogs_author.asp?AUTHOR_ID=22344k>
    <auth>'B"C'</auth>
    </idoc>
    <item>
    <title>Firefox 1.0 is available</title>
    ...
    <language>en</language>
    <image>
    <url>http://p2p.wrox.com/images/p2p/wrox_rss_logo.gif</url>
    <title>Wrox P2P Blogs - Andrew Watt</title>
    <link>http://p2p.wrox.com/blogs_author.asp?AUTHOR_ID=22355link>
    <width>36</width>
    <height>3 </height>
    <auth>public</auth>
    </image>
    <item>
    <title>Firefox 1.0 is available</title>
```

Step S403: Through management of the user data and the content data, if the user uploads a new content or modifies an existing content in the system or modifies the authorization information, the system updates the Feed file accordingly, and the process returns to step S401; otherwise, the process proceeds to step S404.

Step S404: The Feed file is sent to the RSS reader on the client.

A method for reading a Feed file provided by an RSS server according to an embodiment of the present invention is detailed below with reference to FIG. 5. FIG. 5 is a flowchart of the method in this embodiment. The method includes the following steps:
Step S501: The RSS reader obtains a Feed file provided by the RSS server. Specifically, the RSS reader sends a request to the RSS server, and the RSS server sends the Feed file to the RSS reader upon receiving the request; or sends the Feed file to the RSS reader actively.

Step S502: The RSS reader resolves the Feed file and the content authorization.

Step S503: The RSS reader displays the contents of the Feed file according to the content authorization of the Feed file.

If the content authorization of the Feed file is <auth>'A'</auth>, it indicates that the content is visible to user A only. In this case, the resolving module in the RSS reader needs to judge whether the browse request is sent by user A. If the browse request is sent by user A, the displaying module displays the content to user A; and, if the browse request is not sent by user A, the content is discarded, that is, not displayed. If the content authorization of the Feed file is <auth>'B"C'</auth>, it indicates the content is visible to user B and user C only. In this case, the resolving module needs to judge whether the browse request is sent by user B or user C. If the browse request is sent by user B or user C, the displaying module displays the content to user B or user C; and, if the browse request is not sent by user B or user C, the content is discarded, that is, not displayed. If the content authorization of the Feed file is <auth>public</auth>, it indicates that the content is visible to all users, and the displaying module displays the content to the user directly.

The foregoing embodiments enable a user to filter the authorization of reading the Feed file, and meet the user requirements.

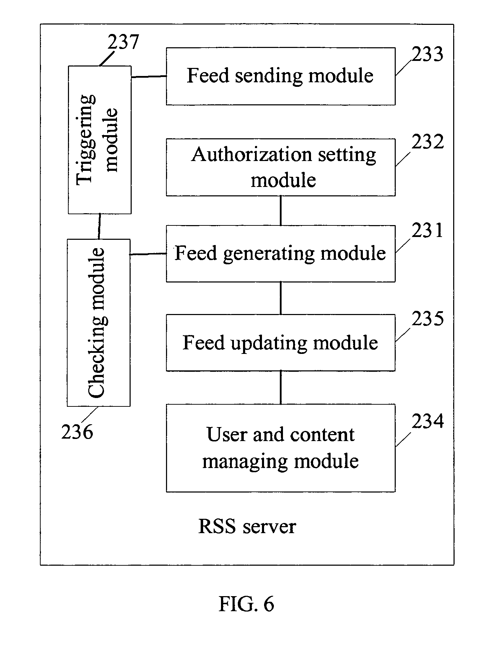

As shown in FIG. 6, the RSS server 23 according to another embodiment of the present invention not only includes a Feed generating module 231, a authorization setting module 232, a Feed sending module 233, a user and content managing module 234, and a Feed updating module 235, but also includes:
a checking module 236, adapted to check whether a user is authorized to read the Feed file generated by the Feed generating module 231; and a triggering module 237, adapted to: trigger the Feed sending module 233 to send the Feed file to the RSS reader of the user when the checking module 236 finds that the user is authorized, and complete filtering of the authorization of reading the Feed file.

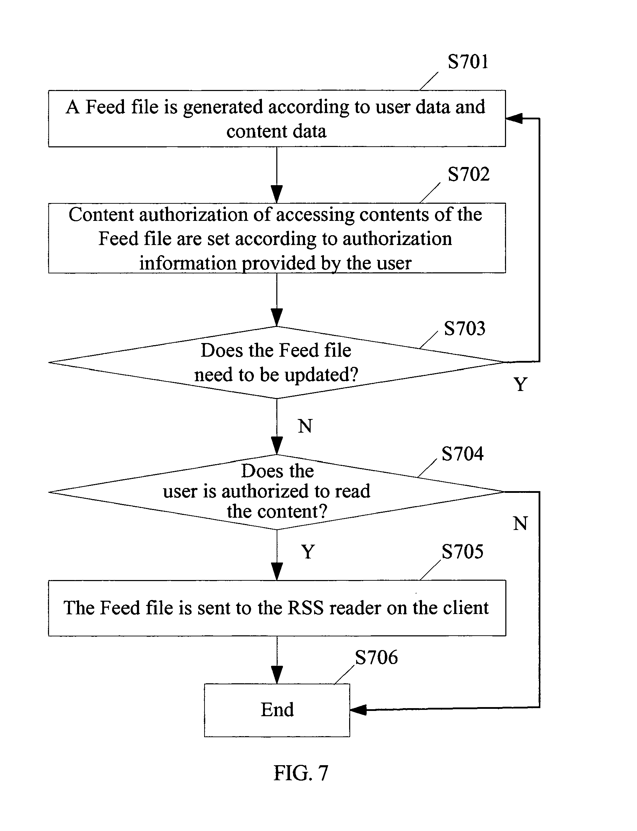

A method for reading a Feed file provided by an RSS server according to another embodiment of the present invention is detailed below with reference to FIG. 7. The method includes the following steps:

Step S701: A Feed file is generated in the RSS server according to user data and content data.

This step is the same as that of the foregoing embodiment, and is not described further.

Step S702: The content authorization of accessing contents of the Feed file is set according to authorization information provided by a user.

This step is the same as that of the foregoing embodiment, and is not described further.

Step S703: Through management of the user data and the content data, if the user uploads a new content or modifies an existing content in the system or modifies the authorization information, the system updates the Feed file accordingly, and the process returns to step S701; otherwise, the process proceeds to step S704.

Step S704: The RSS server checks whether the user who sends a request for reading the Feed file is authorized to read the contents of the Feed file.

The RSS server resolves the content authorization of the Feed file, and checks whether the user who sends a request for reading the Feed file is authorized to read the contents of the Feed file according to the content authorization. If the user is authorized, the user is allowed to read the Feed file, and the process proceeds to step S705; otherwise, the process proceeds to step S706.

Step S705: The RSS server sends the Feed file to the RSS reader of the user who is authorized to read the contents of the Feed file. The RSS reader receives the Feed file after the authorization filtering, and displays the Feed file to the user.

Step S706: The process ends.

As seen from the foregoing embodiments, the RSS server filters authorization to check whether the user has the right of reading the Feed file. Therefore, the contents of the Feed file are never sent to the users who are not authorized. That is, the embodiments relieve the load of transmitting information on the channel, save the communication bandwidth, and improve the system performance.

Through the foregoing description about the embodiments of the present invention, those skilled in the art are clearly aware that the present invention may be implemented through hardware, or through software in addition to a necessary universal hardware platform. Therefore, the technical solution under the present invention may be embodied as a software product. The software product may be stored in a computer-readable storage medium (such as a CD-ROM, a USB flash disk, or a mobile hard disk), and may include several instructions that enable a computer device (such as a personal computer, a server, or a network device) to perform the methods provided in the embodiments of the present invention.

To sum up, in the embodiments of the present invention, content authorization are set for a Feed file, and the RSS server checks whether the user is authorized to read the contents of the Feed file according to the resolved content authorization; if the user is authorized, the contents of the Feed file are displayed to the user. Thus, the embodiments of the present invention overcome the inability of authorization filtering in the prior art which is based on the standard RSS2.0 protocol, help the users to better manage their own data, and meet the user requirements.

Although the invention is described through exemplary embodiments, the invention is not limited to such embodiments.

## Claims

1. A method of providing Feed files by a Rich Site Summary or Really Simple Syndication (RSS) server and of reading the Feed files provided by the Rich Site Summary or Really Simple Syndication (RSS) server, the providing the Feed files comprising:
generating (S401) a Feed file according to user data and content data;
setting (S402) content authorization of accessing contents of the Feed file according to authorization information provided by a user by adding the content authorization to the Feed file, wherein the content authorization comprises private, public, and visible to specified users;
updating (S403), through management of the user data and the content data, if the user uploads a new content or modifies an existing content or modifies the authorization information, the Feed file accordingly; and
sending (S404) the Feed file to an RSS reader on a client; and
the reading of the Feed file by the RSS reader comprising:
obtaining (S501) the Feed file;
resolving (S502) the content authorization of the Feed file; and displaying (S503) contents of the Feed file according to the resolved content authorization;
wherein the process of displaying of the contents of the Feed file according to the content authorization of the Feed file comprises:
displaying the contents of the Feed file to the user providing the contents of the Feed file only, if the content authorization is set to private; or
displaying the contents of the Feed file to all users, if the content rights information is set to public; or
displaying the contents of the Feed file to the specified users only, if the content rights information is set to visible to specified users.

2. A Rich Site Summary or Really Simple Syndication (RSS) system, comprising an RSS server and an Rich Site Summary or Really Simple Syndication (RSS) reader, wherein the RSS server communicates to the RSS reader,
wherein the RSS server comprises:
a Feed generating module (231), adapted to generate a Feed file according to user data and content data;
an authorization setting module (232), adapted to set content authorization of accessing contents of the Feed file according to authorization information provided by a user by adding the content authorization to the Feed file, wherein the content authorization comprises private, public and visible to specified users;
a user and content managing module (234), adapted to manage the user data and the content data;
a Feed updating module (235), adapted to, through management of the user data and the content data, if the user uploads a new content or modifies an existing content or modifies the authorization information, update the Feed file accordingly; and
a Feed sending module (233), adapted to send the Feed file to the RSS reader on a client;
and wherein the RSS reader comprises:
an obtaining module (241), adapted to obtain the Feed file provided by the RSS server;
a resolving module (242), adapted to resolve the content authorization of the Feed file; and
a displaying module (243), adapted to display contents of the Feed file according to the content authorization of the Feed file, and to display
the contents of the Feed file to the user providing the contents of the Feed file only, if the content authorization is set to private; or
the contents of the Feed file to all users, if the content rights information is set to public; or
the contents of the Feed file to the specified users only, if the content rights information is set to visible to specified users.

## Patentansprüche

1. Verfahren zum Bereitstellen von Feed-Dateien durch einen Server des Typs "Rich Site Summary" oder "Really Simple Syndication" (RSS) und zum Lesen der durch den Server des Typs "Rich Site Summary" oder "Really Simple Syndication" (RSS) bereitgestellten Feed-Dateien, wobei das Bereitstellen der Feed-Dateien Folgendes umfasst:
Erzeugen (S401) einer Feed-Datei gemäß Benutzerdaten und Inhaltsdaten;
Setzen (S402) von Inhaltsautorisierung des Zugriffs auf Inhalte der Feed-Datei gemäß durch einen Benutzer bereitgestellten Autorisierungsinformationen durch Hinzufügen der Inhaltsautorisierung zu der Feed-Datei, wobei die Inhaltsautorisierung privat, öffentlich und spezifizierten Benutzern sichtbar umfasst;
Aktualisieren (S403) der Feed-Datei entsprechend durch Verwaltung der Benutzerdaten und der Inhaltsdaten, wenn der Benutzer neuen Inhalt hochlädt oder einen existierenden Inhalt modifiziert oder die Autorisierungsinformationen modifiziert; und
Senden (S404) der Feed-Datei zu einem RSS-Leser auf einem Client; und
das Lesen der Feed-Datei durch den RSS-Leser Folgendes umfasst:
Erhalten (S501) der Feed-Datei;
Auflösen (S502) der Inhaltsautorisierung der Feed-Datei; und
Anzeigen (S503) von Inhalten der Feed-Datei gemäß der aufgelösten Inhaltsautorisierung;
wobei der Prozess des Anzeigens der Inhalte der Feed-Datei gemäß der Inhaltsautorisierung der Feed-Datei Folgendes umfasst:
Anzeigen der Inhalte der Feed-Datei nur für den Benutzer, der die Inhalte der Feed-Datei bereitstellt, wenn die Inhaltsautorisierung auf privat gesetzt ist; oder
Anzeigen der Inhalte der Feed-Datei für alle Benutzer, wenn die Inhaltsrechteinformationen auf öffentlich gesetzt sind; oder
Anzeigen der Inhalte der Feed-Datei nur für die spezifizierten Benutzer, wenn die Inhaltsrechteinformationen auf spezifizierten Benutzern sichtbar gesetzt sind.

2. System des Typs "Rich Site Summary" oder "Really Simple Syndication" (RSS), das einen RSS-Server und einen Leser des Typs "Rich Site Summary" oder "Really Simple Syndication" (RSS) umfasst, wobei der RSS-Server mit dem RSS-Leser kommuniziert,
wobei der RSS-Server Folgendes umfasst:
ein Feed-Erzeugungsmodul (231), ausgelegt zum Erzeugen einer Feed-Datei gemäß Benutzerdaten und Inhaltsdaten;
ein Autorisierungssetzmodul (232), ausgelegt zum Setzen von Inhaltsautorisierung des Zugriffs auf Inhalte der Feed-Datei gemäß durch einen Benutzer bereitgestellten Autorisierungsinformationen durch Hinzufügen der Inhaltsautorisierung zu der Feed-Datei, wobei die Inhaltsautorisierung privat, öffentlich und spezifizierten Benutzern sichtbar umfasst;
ein Benutzer- und Inhaltsverwaltungsmodul (234), ausgelegt zum Verwalten der Benutzerdaten und der Inhaltsdaten;
ein Feed-Aktualisierungsmodul (235), ausgelegt zum entsprechenden Aktualisieren der Feed-Datei durch Verwaltung der Benutzerdaten und der Inhaltsdaten, wenn der Benutzer einen neuen Inhalt hochlädt oder einen existierenden Inhalt modifiziert oder
die Autorisierungsinformationen modifiziert; und
ein Feed-Sendemodul (233), ausgelegt zum Senden der Feed-Datei zu dem RSS-Leser auf einem Client;
und wobei der RSS-Leser Folgendes umfasst:
ein Erhaltemodul (241), ausgelegt zum Erhalten der durch den RSS-Server bereitgestellten Feed-Datei;
ein Auflösungsmodul (242), ausgelegt zum Auflösen der Inhaltsautorisierung der Feed-Datei; und
ein Anzeigemodul (243), ausgelegt zum Anzeigen von Inhalten der Feed-Datei gemäß der Inhaltsautorisierung der Feed-Datei und zum Anzeigen der Inhalte der Feed-Datei nur für den Benutzer, der die Inhalte der Feed-Datei bereitstellt, wenn die Inhaltsautorisierung auf privat gesetzt ist; oder
der Inhalte der Feed-Datei für alle Benutzer, wenn die Inhaltsrechteinformationen auf öffentlich gesetzt sind; oder
der Inhalte der Feed-Datei nur für die spezifizierten Benutzer, wenn die Inhaltsrechteinformationen auf spezifizierten Benutzern sichtbar gesetzt sind.

## Revendications

1. Procédé permettant de fournir des fichiers Feed par un serveur RSS (format Rich Site Summary ou Really Simple Syndication) et de lire les fichiers Feed fournis par le serveur RSS (format Rich Site Summary ou Really Simple Syndication), l'étape consistant à fournir les fichiers Feed comprenant :
générer (S401) un fichier Feed selon des données utilisateur et des données de contenu ;
établir (S402) une autorisation de contenu permettant d'accéder au contenu du fichier Feed selon des informations d'autorisation fournies par un utilisateur en ajoutant l'autorisation de contenu au fichier Feed, l'autorisation de contenu comportant "privé", "public", et "visible pour des utilisateurs spécifiés" ;
mettre à jour (S403) le fichier Feed en conséquence, par l'intermédiaire de la gestion des données utilisateur et des données de contenu, si l'utilisateur télécharge un nouveau contenu vers le serveur ou modifie un contenu existant ou modifie les informations d' autorisation ; et
envoyer (S404) le fichier Feed à un lecteur RSS installé sur un client ; et
la lecture du fichier Feed par le lecteur RSS comprenant les étapes suivantes :
obtenir (S501) le fichier Feed ;
résoudre (S502) l'autorisation de contenu du fichier Feed ; et
afficher (S503) le contenu du fichier Feed selon l'autorisation de contenu résolue ;
le processus permettant d'afficher le contenu du fichier Feed selon l'autorisation de contenu du fichier Feed comprenant :
afficher le contenu du fichier Feed à l'utilisateur en fournissant le contenu du fichier Feed uniquement, si l'autorisation de contenu est fixée à "privé" ; ou
afficher le contenu du fichier Feed à tous les utilisateurs, si les informations concernant les droits de contenu sont fixées à "public" ; ou
afficher le contenu du fichier Feed aux utilisateurs spécifiés uniquement, si les informations concernant les droits de contenu sont fixées à "visible pour des utilisateurs spécifiés".

2. Système RSS (format Rich Site Summary ou Really Simple Syndication), comprenant un serveur RSS et un lecteur RSS (format Rich Site Summary ou Really Simple Syndication), le serveur RSS communiquant avec le lecteur RSS,
le serveur RSS comportant :
un module de génération Feed (231), conçu pour générer un fichier Feed selon des données utilisateur et des données de contenu ;
un module d'établissement d'autorisation (232), conçu pour établir une autorisation de contenu permettant d'accéder au contenu du fichier Feed selon des informations d'autorisation fournies par un utilisateur en ajoutant l'autorisation de contenu au fichier Feed, l'autorisation de contenu comprenant "privé", "public" et "visible pour des utilisateurs spécifiés" ;
un module de gestion utilisateur et contenu (234), conçu pour gérer les données utilisateur et les données de contenu ;
un module de mise à jour Feed (235), conçu pour mettre à jour le fichier Feed en conséquence, par l'intermédiaire de la gestion des données utilisateur et des données de contenu, si l'utilisateur télécharge un nouveau contenu vers le serveur ou modifie un contenu existant ou modifie les informations d' autorisation ; et
un module d'envoi Feed (233), conçu pour envoyer le fichier Feed au lecteur RSS installé sur un client ;
et le lecteur RSS comportant:
un module d'obtention (241), conçu pour obtenir le fichier Feed fourni par le serveur RSS ;
un module de résolution (242), conçu pour résoudre l'autorisation de contenu du fichier Feed ; et
un module d'affichage (243), conçu pour afficher le contenu du fichier Feed selon l'autorisation de contenu du fichier Feed, et pour afficher
le contenu du fichier Feed à l'utilisateur en fournissant le contenu du fichier Feed uniquement, si l'autorisation de contenu est fixée à "privé" ; ou
le contenu du fichier Feed à tous les utilisateurs, si les informations concernant les droits de contenu sont fixées à "public" ; ou
le contenu du fichier Feed aux utilisateurs spécifiés uniquement, si les informations concernant les droits de contenu sont fixées à "visible pour des utilisateurs spécifiés".
